# EUROPEAN PATENT SPECIFICATION

(11) **EP 1 029 375 B1**
(45) Date of publication and mention of the grant of the patent: **19.09.2001**
(21) Application number: 98957810.9
(22) Date of filing: 12.11.1998
(51) Int. Cl.: H01M 2/02, H01M 10/04, H01M 12/06, H01M 2/08

(54) **INDENTED ELECTRODE CUP FOR A GALVANIC CELL**
MIT EINER KERBE VERSEHENE ELEKTRODENKAPPE FÜR GALVANISCHE ZELLE
COIFFE-ELECTRODE CERCLEE D'UNE RAINURE RENTRANTE POUR CELLULE GALVANIQUE

(30) Priority: 14.11.1997 US 970976
(43) Date of publication of application: 23.08.2000
(73) Proprietor: Eveready Battery Company, Inc., Westlake, Ohio 44126 (US)
(72) Inventor: BENNETT, William, R., North Olmsted, OH 44070 (US)
(74) Representative: Lord, Hilton David
(86) International application number: PCT/US98/24032
(87) International publication number: WO 99/26301

(56) References cited:
- US-A- 5 576 117
- US-A- 5 641 367
- US-A- 5 712 058
- PATENT ABSTRACTS OF JAPAN vol. 010, no. 099 (E-396), 16 April 1986 -& JP 60 241641 A (MATSUSHITA DENKI SANGYO KK), 30 November 1985

## Description

The present invention relates to galvanic cells and to processes for producing such, especially where the cell is a miniature type galvanic cell.

The miniaturisation of electronic devices has created a demand for small but powerful electrochemical cells. Cells that utilise an alkaline electrolyte are known to provide high energy density per unit volume and are, therefore, well suited for applications in miniature electronic devices, such as hearing aids, cameras, watches and calculators. However, alkaline electrolytes, such as aqueous potassium hydroxide and sodium hydroxide solutions, have an affinity for wetting metal surfaces and are known to creep through the sealed metal interface of an electrochemical cell. Leakage in this manner can deplete the electrolyte solution from the cell and can also lead to a corrosive deposit on the surface of the cell, detracting from the cell's appearance and marketability. These corrosive salts may also damage the device in which the cell is housed. Typical cell systems where this problem is encountered include silver oxide-zinc cells, nickel-cadmium cells, air depolarised cells and alkaline manganese dioxide cells.

In the prior art, it has been conventional practice to incorporate insulating gaskets between the cell's cup and can, so as to provide a seal for the cell. Generally, the gasket must be made of a material inert to the electrolyte contained in the cell and the cell environment. In addition, it must be flexible and resistant to cold flow, under pressure of the seal, and maintain these characteristics so as to ensure a proper seal during long periods of storage. Materials such as nylon, polypropylene, ethylene-tetrafluoroethylene copolymer and high density polyethylene have been found to be suitable as gasket materials for most applications.

Typically, the insulating gasket is in a "J" shaped configuration into which the extended wall of the cup is inserted so that, upon being radially squeezed, the bottom portion of the gasket forms a seal with the bottom portion of the wall of the cup.

To better ensure a good seal, a sealant is generally applied to the gasket, including its "U" shaped groove so that, upon insertion of the cup into the gasket, the edge of the extended wall of the cup will seat in the sealant and then, upon the application of a compressive force, the wall of the gasket will be compressed against the edge of the extended cup wall.

US-A-4,302,517 discloses a sealed galvanic cell employing an insulating gasket between the can and the cup of the cell. The cell is composed of a first sealing segment disposed and compressed between the rim of the can and the edge of the cup and a second can support segment extending within the cup and substantially parallel to the wall of the cup and defining a plurality of spaced apart openings which accommodate the cell's electrolyte and/or the cell's reaction product.

The gasket in conventional cells generally extends the entire length of the internal wall of the cell. The volume of the gasket can exceed 20% of the internal volume of the cell and, therefore, occupies a great deal of space in the cell for the active components of the cell.

In conventional types of miniature galvanic cells, the height of the upstanding peripheral wall of the gasket usually extends the entire height of the can's upstanding peripheral wall. This type of conventional housing for miniature galvanic cells requires that the thickness of the housing includes a three-wall assembly, constructed as follows: (I) can wall, (2) gasket wall and (3) cup wall. The internal volume for the conventional type housing for a fixed size cell is, accordingly, reduced by such an assembly, thereby reducing available space for the active components of the cell.

Thus, there is still a need for a cell which has a housing that occupies the minimum possible volume, allowing the maximum volume for the cell's electrolyte and/or reaction product.

We have now, surprisingly, discovered that, by providing an indent in the wall of the cup, it is possible to seat the gasket located in the can on the indent, thereby minimising wasted space and maximising the internal volume available for active components.

Accordingly, in a first aspect, the present invention provides a galvanic cell having a housing comprising a cup and a can electrically insulated from each other by means of a gasket, the gasket being located in the can and having a groove to receive the cup,
characterised in that the cup is provided with an upstanding peripheral wall having an inwardly indented area in the vicinity of the open end of the cup and that the gasket extends no further than the indent. The cell is preferably a miniature cell.

The present invention further advantageously provides a miniature cell structure that employs an indented cup and can housing that occupies a minimum internal volume for the cell.

Advantageously, the present invention further provides an indented cup and can housing for a miniature cylindrical cell that uses a low profile type of"J" gasket so that the cell has a large internal volume for its active components.

It is another advantage of the present invention that it is easy to make a suitable indented cup and can housing, and which is cost effective to produce and easy to assemble.

The present invention further advantageously provides a process for producing a miniature cell with a novel indented cup and can housing occupying a minimum volume for the cell.

Thus, the present invention generally relates to a miniature type galvanic cell employing an indented contour cup and can assembly that occupies a relatively small volume so that the internal volume of this cell is reserved primarily for the active components of the cell. The present invention also relates to a process for producing a miniature galvanic cell having optimum internal volume for the active components of the cell.

In an alternative aspect, the present invention provides a galvanic cell having a first electrode, a second electrode of opposite polarity, a separator between the electrodes and an electrolyte, all disposed within a two-part electrically conductive housing, one part of which is a can which is electrically connected to the first electrode and the other part of which is a cup which is electrically connected to the second electrode. The can has a wall with an edge defining an opening. The cup has an upstanding wall with an outer surface and an edge end defining an opening as well as an inward indented area in the vicinity of the open end of the cup. Between the can and the cup is an insulating gasket having a base member with a bottom surface contacting the first electrode, an outer wall having a top edge, and an inner wall spaced apart from the outer wall thereby defining a "U" shaped groove. The edge of the cup's wall is disposed within the groove of the gasket, the outer wall of the gasket is disposed between the wall of the can and the wall of the cup, the outer wall of the gasket has a height sufficient so that the top edge of the gasket's outer wall is disposed on the outer surface of the cup's wall at the indented area, and the edge of the can's wall is secured against the gasket thereby sealing the can to the cup at the indented area of the cup *via* the gasket.

Thus, more specifically, in this aspect, the present invention provides a galvanic cell comprising:
a) a first electrode having a polarity;
b) a second electrode of opposite polarity;
c) a separator between the first electrode and the second electrode;
d) an electrolyte;
e) a two-part conductive housing containing the first electrode, the second electrode, the separator and the electrolyte, the first part of the housing being a can electrically connected to the first electrode and having a wall and an edge defining an opening, and the second part of the housing being a cup electrically connected to the second electrode, having an upstanding wall with an outer surface and an edge end defining an opening, and having an inward indented area at the vicinity of the open end of the cup; and
f) an insulating gasket comprising a base member having a bottom surface contacting the first electrode, an outer wall having a top edge, and an inner wall spaced apart from the outer wall thereby defining a "U" shaped groove; wherein the edge of the cup's wall is disposed within the groove of the gasket, the outer wall of the gasket is disposed between the wall of the can and the wall of the cup, the outer wall of the gasket has a height sufficient so that the top edge of the gasket's outer wall is disposed on the outer surface of the cup's wall at the indented area, and the edge of the can's wall is secured against the gasket thereby sealing the can to the cup at the indented area of the cup *via* the gasket.

The term 'galvanic cell', as used herein, refers to an electrochemical cell which contains two electrodes, positive and negative, a separator between the two electrodes and an electrolyte, all contained within a housing. The term 'galvanic cell' is standard in the art, and suitable materials for the components of such a cell and the housing are readily apparent to the person skilled in the art. We prefer that the galvanic cell is an air depolarised cell. Further, we prefer that the negative electrode of the cell comprises zinc.

As used herein, "indented area" refers to any distortion of the cup's wall that produces a disturbed area such as a bead, rim or any other geometrically indented contour. It will be appreciated that the indented area is configured so as to enable the edge of the cup wall to co-operate with the gasket. As such, the distortion of the cup wall may be of any suitable magnitude, such that the cup wall is able to interact with the relevant site on the gasket. An 'inwardly' indented area is indent directed towards the inside of the cell when the cell is assembled.

The indented area may be a simple inward distortion of the cup wall, forming a shoulder. Alternatively, for example, the end of the cup may be initially distorted inwardly and then distorted outwardly again, towards the outside of the cell. As discussed above, the specific topology of the indented area is constrained only by a requirement to co-operate with the gasket. We prefer that the indented area of the cup has a bead contour.

The gasket does not extend vertically further than the indent in the wall of the cup. Specifically, this refers to the position of the gasket with respect to the upstanding peripheral wall of the can, the gasket extending in a direction away from the base of the can. We particularly prefer that the edge of the can wall extends vertically no further than the centre point of the indent, and more particularly that the top edge of the outer wall of the gasket extends beyond the edge end of the inner surface of the can wall, as long as the gasket does not extend so far as to add to the maximum diameter of the cell. When the gasket extends beyond the end of the can wall, it helps prevent short circuits due to the end of the can wall contacting the cup and particles of foreign matter bridging between the can and the cup.

The vertically located centre point of the indented area is preferably located between 5% and 40% of the vertical length of the upstanding wall of the cup, measured from the open edge of the wall, more preferably between 8% and 30% of the vertical length of the upstanding wall and, most preferably, between 10% and 25% of the vertical length of the upstanding wall of the cup.

Contrary to known types of conventional miniature galvanic cell, the housing of the present invention preferably employs a beaded cup and can housing that provides only a single wall thickness (the cup's upstanding wall) for the vertical component of the housing, thereby maximising the internal volume of the housing to accommodate more of the active materials of the cell.

The cup of the housing of the present invention preferably has a beaded contour in the vicinity of its open end, so that the majority of the height of the upstanding peripheral wall of the cup is disposed above the beaded area. Therefore, the cross-sectional thickness of the housing is substantially composed only of the thickness of the wall of the cup. Furthermore, the can of the housing of the present invention has an upstanding peripheral wall that is much smaller in height than the conventional upstanding peripheral wall of cans of cells of the prior art. The reduction in height of both the can and the gasket provides an additional advantage, in that less material is used in the manufacturing process.

We prefer that the cross-sectional thickness of the housing is composed only of the thickness of the wall of the cup over at least 35 % of the length of the cell. We particularly prefer that the cross-sectional thickness of the housing is composed only of the thickness of the wall of the cup over at least 50 % of the length of the wall, with over 75% being most preferred.

In a preferred embodiment of the present invention, the cup is formed so that the edge of the cup's upstanding wall is deformed to a degree sufficient to accommodate at least a fraction of the thickness of the outer wall of the gasket and the thickness of the upstanding wall of the can. The average external diameter of the cup above the indented area is then anywhere between about 95% and about 105% of the average external diameter of the can. Preferably, the average external diameter of the cup is between 97% and 103% and more preferably about 100% of the average external diameter of the upstanding wall of the can. Preferably the cup's upstanding wall is deformed inwardly so that the average external diameter of the cup is about equal to the average external diameter of the can.

The terms 'cup' and 'can', as used herein, are standard in the art. Suitable materials for the manufacture of the cup and the can would be immediately apparent to the person skilled in the art.

The term 'co-operate', as used herein, refers to the means by which the wall of the cup and its edge interact with the gasket, to form a seal. We prefer that the interaction results from the end of the wall fitting into a groove defined within the gasket, as this arrangement is simple and cheap to manufacture. The groove defined within the gasket may be U-shaped, or may initially be L-shaped and be subsequently distortable to form a U-shaped groove when the edge of the cup is forced into the base of the L-shaped gasket.

In a further aspect, the present invention provides a process for assembling the components of a cell into a two-part conductive housing in which one part is a cup and the other part is a can, comprising the steps:
a) preparing a conductive cup having a peripheral wall terminating with an edge end defining an opening, and preparing an indented area at the vicinity of the open end;
b) preparing an electrically insulating gasket with a base member having an inner upstanding wall and an outer upstanding wall terminating with an edge, the walls being spaced apart to define a "U" shaped groove;
c) preparing a conductive can with a peripheral wall having an edge defining an opening for the can;
d) placing the components of the cell within the cup and can and then placing the can over the cup so that the wall of the can is in parallel alignment with the wall of the cup, the gasket being disposed in physical contact between the wall of the cup and the wall of the can, the edge of the outer wall of the gasket being disposed at the indented area of the cup; and
e) securing the edge of the wall of the can onto the outer wall of the gasket and onto the wall of the cup so as to effectively seal the can to the cup *via* the gasket and thereby electrically insulate the can from the cup.

In step a) of the above process, the indented area of the cup can be formed by inwardly deforming the area at the vicinity of the open end of the upstanding wall of the cup. Preferably, the area should be deformed to a degree that is between 90% and 110% of the sum of the thickness of the outer wall of the gasket and the upstanding wall of the can. Preferably, the depth measured in the indented area could be between about 95% and 105% of the sum of the thickness of the outer wall of the gasket and the upstanding wall of the can, and more preferably about 100% of the sum of the thickness of the outer wall of the gasket and the upstanding wall of the can.

We prefer that the edge end of the cup's upstanding wall is indented to a depth of between 90% and 110% of the sum of the thickness of the outer wall of the gasket and the upstanding wall of the can, most preferably to a depth of between 95% and 105% of the sum of the thickness of the outer wall of the gasket and the upstanding wall of the can.

The housing geometry of the present invention accomplishes two important benefits. First, the removal of the upstanding wall of the can and outer wall of the gasket above the indented area allows the negative cup compartment to be expanded without increasing the outer diameter of the cell. Second, by locating the seal closer to the gasket and positive electrode, the seal will be a stronger seal. Specifically, the can, gasket and cup assembly is generally sealed by crimping the can so that it pinches down upon the gasket. By locating the crimp closer to the gasket/electrode pinch point, the seal is improved.

In some applications, a conductive label may be required to provide an electrical contact point at the side of the cell. This feature can be accomplished by utilising a film having an electrically insulating adhesive inner layer adapted to be secured to the negative cup wall. The outer layer can then be an electrically conductive surface that would provide electrical contact with the can of the cell and, therefore, the side of the cell would serve as the terminal of the can or positive terminal.

The nature of the gasket of the present invention is not critical, but should generally be chosen with consideration given to its stability in the presence of the electrolyte, its resiliency, and its resistance to cold flow. Suitable materials include polymers such as nylon, polytetrafluoroethylene, fluorinated ethylene-propylene, chlorotrifluoroethylene, perfluoroalkoxy polymer, polyvinyls, polyethylene, polypropylene, polystyrene. Other suitable materials will be readily apparent to those skilled in the art. In some applications, additional precautions can be used in conjunction with the gasket of the present invention to provide a more effective seal, such as coating selected areas of the gasket with a sealing agent, such as a fatty polyamide resin or asphalt.

It will be appreciated that the cells of the present invention are preferably miniature, cylindrical cells, but that other types of cell may be constructed in such a way, as appropriate. In particular, we prefer that the cell formation is a cup and can type, preferably cylindrical.

The gasket of the present invention is mainly or wholly contained within the walls of the can. During manufacture, the cup walls are inserted into the gasket, and the can provides support to the gasket during this process. In a preferred embodiment, the cup of the present invention is the negative terminal of the cell. During manufacture, the cup wall may be inserted into the groove of the gasket before the negative electrode mixture is placed into the cup, thus keeping the sealing surface free of the mixture and helping insure a good seal that is resistant to leakage.

The present invention will now be further illustrated with reference to the accompanying drawings, in which:
Figure 1 is a cross-sectional view of a negative electrode cup for use in an air depolarised cell;
Figure 2 is a cross-sectional view of a low profile gasket for use in the present invention;
Figure 3 is a cross-sectional view of low profile can containing a positive electrode in accordance with the present invention;
Figure 4 is a cross-sectional view of cup of Figure 1 containing the gasket of Figure 2 and an anode; and
Figure 5 is a cross-sectional view of a cell containing the cup, gasket and negative electrode of Figure 1 inverted over the can with the positive electrode of Figure 3 after the wall of the can was crimped to provide a sealed cell.

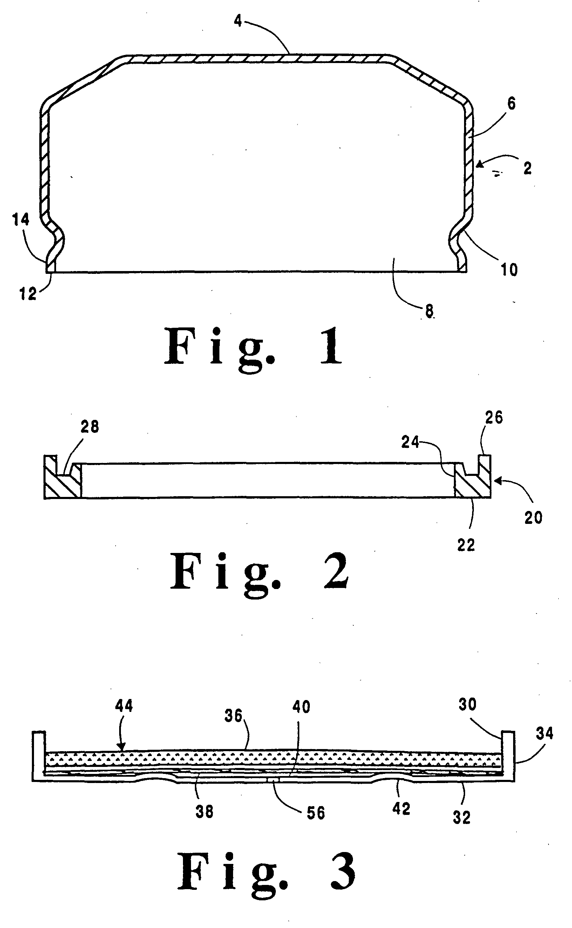

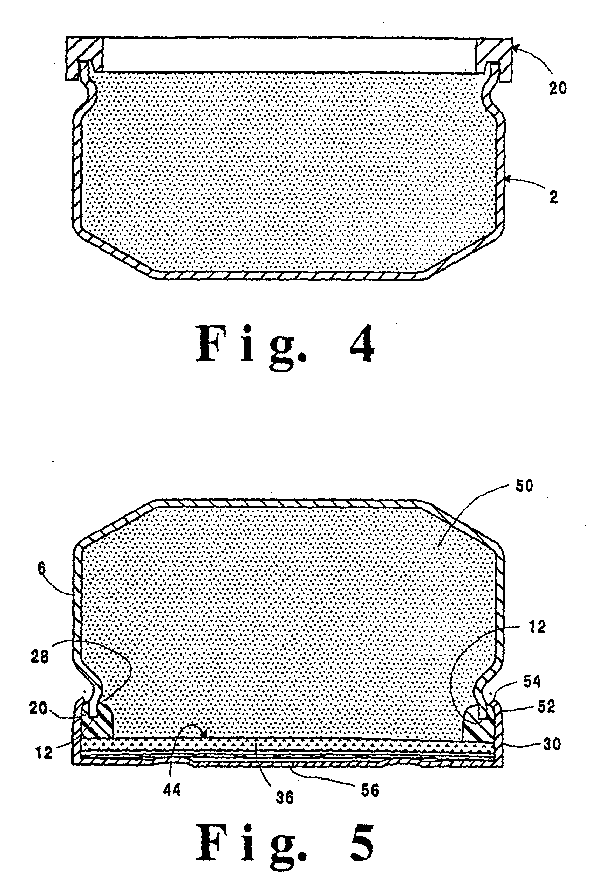

Turning to the figures, Figure 1 shows a circular cup 2 having a base member 4 and an upstanding peripheral wall 6 defining an opening 8. Disposed at the vicinity of the open end 8 of the upstanding wall 6 is an inwardly formed bead 10. The upstanding wall 6 is terminated with an edge 12 shown substantially in line with upstanding wall 6. If desired, the edge portion 14 could be further deformed to a degree such that the outer wall of the edge portion 14 would be indented to a depth equal to the sum of the thickness of the gasket 20 of Figure 2 and the thickness of the upstanding wall 34 of Figure 3. In this type of embodiment (not shown), the average outside diameter of the cup 2 could be equal to the average outside diameter of the can 30. It is to be understood that the degree of deformation of the area 10 formed by the bead contour can vary depending on the specific application of the desired housing geometry.

Figure 2 shows a low profile gasket 20 comprising a base member 22, an inner wall 24 and an outer wall 26. Inner wall 24 and outer wall 26 define a groove 28.

Figure 3 shows a circular can 30 having a base member 32 and upstanding wall 34. Positive electrode 36, air distribution member 38, and a layer of polytetrafluoroethylene 40 are disposed at the bottom of the can 30. The positive electrode 36, generally called an air electrode, can comprise manganese dioxide, activated carbon, and electroconducting acetylene black, with further addition of polytetrafluorethylene (PTFE) dispersion, providing a mix that can be applied on a metallic screen. The layer of polytetrafluoroethylene 40 covers the entire base 32 of can 30 including the air distribution membrane 38. The can 30 can have patterned internal embossed sections 42 to provide a defined gap for uniform air distribution across the surface of an electrode 36 which is disposed within can 30. The electrode assembly 44 containing member 39 and electrode 36 and polytetrafluoroethylene layer 40, can be secured within the can 30 by conventional means.

Figures 4 and 5 show a cup 2 with a negative electrode 50 comprising zinc powder, placed in the cup 2 and making electronic contact with the cup 2. The negative electrode 50 can comprise a mixture of zinc particles, electrolyte and organic compounds such as binders which make up the battery's negative electrode 50. The cup 2 can be made from a trilaminate material comprising copper that has been laminated to the bare side of a nickel-clad steel strip. A nickel layer could be used to protect the exterior surface of the steel strip. Other laminated materials from which the cup may be made include: a bilaminate of copper on a stainless steel substrate or a laminate made from more than three layers. Round disks punched from this laminated metal strip are then formed into a cup. The copper layer forms the inside surface of the cup and directly contacts the negative electrode mixture.

As shown in Figure 5, the can 30 along with the inserted electrode assembly 44 is disposed below the cup 2 which is preassembled according to the present invention and contains negative electrode 50. The edge 12 of the wall 6 of the cup 2 is shown secured in groove 28 of gasket 20 and the gasket is seated on electrode 36. The rim 54 of can 30 is then compressed against the electrically insulating gasket 20 between the cup 2 and the can 30 thereby forming a seal and an electrical barrier between the can 30 and the cup 2.

As shown in Figures 3 and 5, hole 56 is punched into the bottom of can 30 to act as an air-entering port. The cell shown in Figure 5 has the can 30 in electrical contact with electrode 36 and the cup 2 in electrical contact with electrode 50 and thus the terminals of the cell are at opposite ends.

## Claims

1. A galvanic cell having a housing comprising a cup and a can electrically insulated from each other by means of a gasket, the gasket being located in the can and having a groove to receive the cup, **characterised in that** the cup is provided with an upstanding peripheral wall having an inwardly indented area in the vicinity of the open end of the cup and that the gasket extends vertically no further than the indent.

2. A cell according to claim 1, wherein the cross-sectional thickness of the housing is composed only of the thickness of the wall of the cup over at least 35% of the vertical length of the cell.

3. A cell according to claim 2, wherein the cross-sectional thickness of the housing is composed only of the thickness of the wall of the cup over at least 50% of the vertical length of the cell.

4. A cell according to claim 3, wherein the cross-sectional thickness of the housing is composed only of the thickness of the wall of the cup over at least 75% of the vertical length of the cell.

5. A galvanic cell according to any preceding claim, wherein the indented area of the cup has an inverted bead contour.

6. A galvanic cell according to any preceding claim, wherein the indented area of the cup has a centre point on the indented area measured on the vertical axis of the cell, and the centre point is located between about 5% to about 40% of the length of the upstanding wall of the cup measured from the open end of the upstanding wall of the cup.

7. A galvanic cell according to claim 6, wherein the indented area of the cup has a centre point on the indented area measured on the vertical axis of the cell, and the centre point is located between about 8% to about 30% of the vertical length of the upstanding wall of the cup measured from the open end of the upstanding wall of the cup.

8. A galvanic cell according to claim 7, wherein the indented area of the cup has a centre point on the indented area measured on the vertical axis of the cell, and the centre point is located between about 10% to about 25% of the vertical length of the upstanding wall of the cup measured from the open end of the upstanding wall of the cup.

9. A galvanic cell according to any preceding claim, wherein the average external diameter of the cup above the indented area is between about 95% and about 105% of the average external diameter of the can.

10. A galvanic cell according to claim 9, wherein the average external diameter of the cup above the indented area is between about 97% and about 103% of the average external diameter of the can.

11. A galvanic cell according to claim 10 wherein the average external diameter of the cup above the indented area is about 100% of the average external diameter of the can.

12. A galvanic cell according to any preceding claim, wherein the cell is an air depolarised cell.

13. A galvanic cell according to any preceding claim, wherein the edge end of the cup's upstanding wall is indented to a depth of between 90% and 110% of the sum of the thickness of the outer wall of the gasket and the upstanding wall of the can.

14. A galvanic cell according to claim 13, wherein the edge end of the cup's upstanding wall is indented to a depth of between 95% and 105% of the sum of the thickness of the outer wall of the gasket and the upstanding wall of the can.

15. A galvanic cell according to any preceding claim, which is a miniature, cylindrical cell.

16. A galvanic cell according to any preceding claim, wherein the groove in the gasket is U-shaped, formed from an L-shape when the edge of the cup is forced into the gasket.

17. A process for assembling a galvanic cell as defined in any preceding claim, comprising the steps:
a) preparing a cup having an upstanding wall terminating with an edge end defining an opening, and preparing an indented area in the wall of the cup at the vicinity of the open end;
b) preparing an electrically insulating gasket with a base member having an inner upstanding wall and an outer upstanding wall terminating with an edge, the walls being spaced apart to define a "U" shaped groove;
c) preparing a conductive can with a peripheral wall having an edge defining an opening for the can;
d) placing the components of the cell within the cup and can and then placing the can over the cup so that the wall of the can is in parallel alignment with the wall of the cup, the gasket being disposed in physical contact between the wall of the cup and the wall of the can, and the edge of the outer wall of the gasket being disposed at the indented area of the cup; and
e) securing the edge of the can's wall onto the outer wall of the gasket and onto the wall of the cup so as to seal the can to the cup via the gasket and thereby electrically insulate the can from the cup.

## Patentansprüche

1. Galvanisches Element mit einem Gehäuse, das einen Becher und eine Kappe umfaßt, die durch eine Dichtung elektrisch gegeneinander isoliert sind, wobei sich die Dichtung in der Kappe befindet und eine Rille hat, um den Becher aufzunehmen, **dadurch gekennzeichnet, daß** der Becher mit einer hochstehenden Umfangswand versehen ist, die in der Nähe des offenen Endes des Bechers einen nach innen eingekerbten Bereich hat, und daß die Dichtung nicht weiter senkrecht als bis zu der Einkerbung reicht.

2. Element nach Anspruch 1, bei dem die Querschnittstärke des Gehäuses sich über wenigstens 35% der senkrechten Länge des Elements nur aus der Stärke der Wand des Bechers zusammensetzt.

3. Element nach Anspruch 2, bei dem die Querschnittstärke des Gehäuses sich über wenigstens 50% der senkrechten Länge des Elements nur aus der Stärke der Wand des Bechers zusammensetzt.

4. Element nach Anspruch 3, bei dem die Querschnittstärke des Gehäuses sich über wenigstens 75% der senkrechten Länge des Elements nur aus der Stärke der Wand des Bechers zusammensetzt.

5. Galvanisches Element nach einem der vorhergehenden Ansprüche, bei dem der eingekerbte Bereich des Bechers ein umgekehrtes Sickenprofil hat.

6. Galvanisches Element nach einem der vorhergehenden Ansprüche, bei dem der eingekerbte Bereich des Bechers einen mittleren Punkt auf dem eingekerbten Bereich hat, gemessen auf der senkrechten Achse des Elements, und der mittlere Punkt sich zwischen etwa 5% und etwa 40% der Länge der hochstehenden Wand des Bechers, gemessen vom offenen Ende der hochstehenden Wand des Bechers, befindet.

7. Galvanisches Element nach Anspruch 6, bei dem der eingekerbte Bereich des Bechers einen mittleren Punkt auf dem eingekerbten Bereich hat, gemessen auf der senkrechten Achse des Elements, und der mittlere Punkt sich zwischen etwa 8% und etwa 30% der senkrechten Länge der hochstehenden Wand des Bechers, gemessen vom offenen Ende der hochstehenden Wand des Bechers, befindet.

8. Galvanisches Element nach Anspruch 7, bei dem der eingekerbte Bereich des Bechers einen mittleren Punkt auf dem eingekerbten Bereich hat, gemessen auf der senkrechten Achse des Elements, und der mittlere Punkt sich zwischen etwa 10% und etwa 25% der senkrechten Länge der hochstehenden Wand des Bechers, gemessen vom offenen Ende der hochstehenden Wand des Bechers, befindet.

9. Galvanisches Element nach einem der vorhergehenden Ansprüche, bei dem der durchschnittliche Außendurchmesser des Bechers über dem eingekerbten Bereich zwischen etwa 95% und etwa 105% des durchschnittlichen Außendurchmessers der Kappe beträgt.

10. Galvanisches Element nach Anspruch 9, bei dem der durchschnittliche Außendurchmesser des Bechers über dem eingekerbten Bereich zwischen etwa 97% und etwa 103% des durchschnittlichen Außendurchmessers der Kappe beträgt.

11. Galvanisches Element nach Anspruch 10, bei dem der durchschnittliche Außendurchmesser des Bechers über dem eingekerbten Bereich etwa 100% des durchschnittlichen Außendurchmessers der Kappe beträgt.

12. Galvanisches Element nach einem der vorhergehenden Ansprüche, bei dem das Element ein Luftsauerstoffelement ist.

13. Galvanisches Element nach einem der vorhergehenden Ansprüche, bei dem das Randende der hochstehenden Wand des Bechers bis zu einer Tiefe zwischen 90% und 110% der Summe der Stärke der Außenwand der Dichtung und der hochstehenden Wand der Kappe eingekerbt ist.

14. Galvanisches Element nach Anspruch 13, bei dem das Randende der hochstehenden Wand des Bechers bis zu einer Tiefe zwischen 95% und 105% der Summe der Stärke der Außenwand der Dichtung und der hochstehenden Wand der Kappe eingekerbt ist.

15. Galvanisches Element nach einem der vorhergehenden Ansprüche, das ein zylindrisches Miniaturelement ist.

16. Galvanisches Element nach einem der vorhergehenden Ansprüche, bei dem die Rille in der Dichtung U-förmig ist, aus einer L-Form gebildet wird, wenn der Rand des Bechers in die Dichtung gedrückt wird.

17. Verfahren für den Zusammenbau eines galvanischen Elements nach einem der vorhergehenden Ansprüche, welches die folgenden Schritte umfaßt:
a) Herstellen eines Bechers mit einer hochstehenden Wand, die in einem Randende ausläuft, das eine Öffnung definiert, und Herstellen eines eingekerbten Bereichs in der Wand des Bechers in der Nähe des offenen Endes,
b) Herstellen einer elektrisch isolierenden Dichtung mit einem Basiselement, das eine innere hochstehende Wand und eine äußere hochstehend Wand hat, die in einem Rand ausläuft, wobei die Wände mit Zwischenraum angeordnet sind, um eine U-förmige Rille zu bilden,
c) Herstellen einer leitenden Kappe mit einer Umfangswand, die einen Rand hat, der eine Öffnung für die Kappe definiert,
d) Anordnen der Komponenten des Elements innerhalb des Bechers und der Kappe und anschließendes Anordnen der Kappe über dem Becher, so daß die Wand der Kappe parallel mit der Wand des Bechers ausgerichtet ist, wobei die Dichtung im physikalischen Kontakt zwischen der Wand des Bechers und der Wand der Kappe angeordnet ist und wobei der Rand der Außenwand der Dichtung am eingekerbten Bereich des Bechers angeordnet ist, und
e) Befestigen des Randes der Wand der Kappe an der Außenwand der Dichtung und an der Wand des Bechers, um so die Kappe mit Hilfe der Dichtung gegenüber dem Becher abzudichten und dadurch die Kappe elektrisch gegenüber dem Becher zu isolieren.

## Revendications

1. Pile galvanique comportant un boîtier comprenant une coupelle et un bac isolés électriquement l'un de l'autre par l'intermédiaire d'une garniture isolante, la garniture isolante étant agencée dans le bac et comportant une rainure destinée à recevoir la coupelle, **caractérisée en ce que** la coupelle comporte une paroi périphérique verticale comportant une zone entaillée vers l'intérieur au voisinage de l'extrémité ouverte de la coupelle, la garniture isolante s'étendant verticalement sur une distance ne dépassant pas l'entaille.

2. Pile selon la revendication 1, dans laquelle l'épaisseur de section transversale du boîtier est composée uniquement de l'épaisseur de la paroi de la coupelle sur au moins 35% de la longueur verticale de la pile.

3. Pile selon la revendication 2, dans laquelle l'épaisseur de section transversale du boîtier est composée uniquement de l'épaisseur de la paroi de la coupelle sur au moins 50% de la longueur verticale de la pile.

4. Pile selon la revendication 3, dans laquelle l'épaisseur de section transversale du boîtier est composée uniquement de l'épaisseur de la paroi de la coupelle sur au moins 75% de la longueur verticale de la pile.

5. Pile galvanique selon l'une quelconque des revendications précédentes, dans laquelle la zone entaillée de la coupelle a un profil nervuré inversé.

6. Pile galvanique selon l'une quelconque des revendications précédentes, dans laquelle la zone entaillée de la coupelle comporte un centre sur la zone entaillée, mesuré sur l'axe vertical de la pile, le centre étant agencé à un niveau représentant entre environ 5% et environ 40% de la longueur de la paroi verticale de la coupelle, mesurée à partir de l'extrémité ouverte de la paroi verticale de la coupelle.

7. Pile galvanique selon la revendication 6, dans laquelle la zone entaillée de la coupelle comporte un centre sur la zone entaillée mesuré sur l'axe vertical de la pile, le centre étant agencé à un niveau représentant entre environ 8% et environ 30% de la longueur verticale de la paroi verticale de la coupelle, mesurée à partir de l'extrémité ouverte de la paroi verticale de la coupelle.

8. Pile galvanique selon la revendication 7, dans laquelle la zone entaillée de la coupelle comporte un centre sur la zone entaillée, mesuré sur l'axe vertical de la pile, le centre étant situé à un niveau représentant entre environ 10% et environ 25% de la longueur verticale de la paroi verticale de la coupelle, mesurée à partir de l'extrémité ouverte de la paroi verticale de la coupelle.

9. Pile galvanique selon l'une quelconque des revendications précédentes, dans laquelle le diamètre extérieur moyen de la coupelle au-dessus de la zone entaillée représente entre environ 95% et environ 105% du diamètre extérieur moyen du bac.

10. Pile galvanique selon la revendication 9, dans laquelle le diamètre extérieur moyen de la coupelle au-dessus de la zone entaillée représente entre environ 97% et environ 103% du diamètre extérieur moyen du bac.

11. Pile galvanique selon la revendication 10, dans laquelle le diamètre extérieur moyen de la coupelle au-dessus de la zone entaillée représente environ 100% du diamètre extérieur moyen du bac.

12. Pile galvanique selon l'une quelconque des revendications précédentes, dans laquelle la pile est une pile à dépolarisation d'air.

13. Pile galvanique selon l'une quelconque des revendications précédentes, dans laquelle l'extrémité de bordure de la paroi verticale de la coupelle est entaillée à une profondeur représentant entre 90% et 110% de la somme de la profondeur de la paroi externe de la garniture isolante et de la paroi verticale du bac.

14. Pile galvanique selon la revendication 13, dans laquelle l'extrémité de bordure de la paroi verticale de la coupelle est entaillée à une profondeur représentant entre 95% et 105% de la somme de l'épaisseur de la paroi externe de la garniture isolante et de la paroi verticale du bac.

15. Pile galvanique selon l'une quelconque des revendications précédentes, cette pile étant une pile cylindrique miniature.

16. Pile galvanique selon l'une quelconque des revendications précédentes, dans laquelle la rainure dans la garniture isolante a une forme en U, formée à partir d'une forme en L lors le bord de la coupelle est poussé dans la garniture isolante.

17. Procédé d'assemblage d'une pile galvanique comme défini dans l'une quelconque des revendications précédentes, comprenant les étapes ci-dessous:
a) préparation d'une coupelle comportant une paroi verticale se terminant par une extrémité de bordure et définissant une ouverture, et préparation d'une zone entaillée dans la paroi de la coupelle au voisinage de l'extrémité ouverte;
b) préparation d'une garniture isolante à isolation électrique avec un élément de base comportant une paroi verticale interne et une paroi verticale externe se terminant par un bord, les parois étant espacées pour définir une rainure en U;
c) préparation d'un bac conducteur avec une paroi périphérique comportant un bord définissant une ouverture pour le bac;
d) agencement des composants de la pile dans la coupelle et le bac avant de placer le bac au-dessus de la coupelle, de sorte que la paroi du bac est alignée parallèlement avec la paroi de la coupelle, la garniture isolante étant en contact physique avec la zone intermédiaire entre la paroi de la coupelle et la paroi du bac, le bord de la paroi externe de la garniture isolante étant agencé au niveau de la zone entaillée de la coupelle; et
e) fixation du bord de la paroi du bac sur la paroi externe de la garniture isolante et sur la paroi de la coupelle de sorte à sceller le bac à la coupelle par l'intermédiaire de la garniture isolante pour isoler ainsi électriquement le bac de la coupelle.
